# EUROPEAN PATENT APPLICATION

(11) **EP 4 711 602 A1**
(43) Date of publication of application: **18.03.2026**
(21) Application number: 24200862.1
(22) Date of filing: 17.09.2024
(51) Int. Cl.: F02D 19/02, F02D 41/00, F02M 21/02, F02M 21/06, F17C 13/00

(54) **A SYSTEM FOR SUPPLYING HIGH-PRESSURE GASEOUS HYDROGEN FUEL**

(71) Applicant: VOLVO TRUCK CORPORATION, 405 08 Göteborg (SE)
(72) Inventor: LI, Jian, Hagerstown, 21742 (US); THOMAS, Jonathan, Frederick, 21703 (US)
(74) Representative: Zacco Sweden AB

(57) **Abstract**

The invention concerns a fuel supply system (1) for supplying high-pressure gaseous hydrogen fuel to an internal combustion engine (10), the system (1) comprising: a hydrogen fuel tank arrangement (2, 3) and a fuel delivery line (4) arranged to deliver gaseous hydrogen from the hydrogen fuel tank arrangement (2, 3) to the internal combustion engine (10), wherein the hydrogen fuel tank arrangement comprises at least one gas-phase tank (2) configured to contain high-pressure gas-phase hydrogen and at least one liquid tank (3) configured to contain liquid hydrogen, wherein a controllable heater (5, 6) is arranged in association with the at least one liquid tank (3) so as to heat and vaporize the liquid hydrogen when activating the heater (5, 6), wherein the system (1) is configured to direct the heated and vaporized hydrogen into the fuel delivery line (4) as a complement or alternative to hydrogen gas directed into the fuel delivery line (4) from the gas-phase tank (2).

## Description

### TECHNICAL FIELD

The disclosure relates generally to a system for supplying high-pressure gaseous hydrogen fuel. In particular aspects, the disclosure relates to a system for supplying high-pressure gaseous hydrogen fuel to an internal combustion engine arranged onto a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

There is a growing interest in using hydrogen-fueled internal combustion engines in vehicle drive lines since it can reduce the emission of greenhouse gases significantly (if the hydrogen is not produced from fossil raw material).

Hydrogen-powered internal combustion engine (ICE) systems are typically adapted for high-pressure direct injection (HDPI) technology where high-pressure gas-phase hydrogen tanks (typically filled at 700 bar) supply hydrogen fuel to the engine. HPDI typically requires injection pressures above 310 bar for efficient engine operation. As the vehicle consumes fuel, the tank pressure gradually decreases. Once it drops below a certain threshold, such as 310 bar, the engine cannot function optimally, leading to significant amounts of unutilized hydrogen fuel remaining in the tanks if no action is taken.

Current solutions involve equipping vehicles with hydraulic pumps and hydrogen compressors to boost hydrogen fuel pressure by compressing hydrogen into a separate buffer tank when the primary gas-phase hydrogen fuel tank pressure drops. However, this solution introduces drawbacks like increased production and maintaining costs, added weight, and complex packaging requirements, impacting the vehicle's efficiency, safety and cost-effectiveness.

There is thus a need for improvements in the field of hydrogen-powered ICE systems.

### SUMMARY

According to a first aspect of the disclosure it concerns a fuel supply system for supplying high-pressure gaseous hydrogen fuel to an internal combustion engine, the system comprising: a hydrogen fuel tank arrangement and a fuel delivery line arranged to deliver gaseous hydrogen from the hydrogen fuel tank arrangement to the internal combustion engine. The hydrogen fuel tank arrangement comprises at least one gas-phase tank configured to contain high-pressure gas-phase hydrogen and at least one liquid tank configured to contain liquid hydrogen. A controllable heater is arranged in association with the at least one liquid tank so as to heat and vaporize the liquid hydrogen when activating the heater. The system is configured to direct the heated and vaporized hydrogen into the fuel delivery line as a complement or alternative to hydrogen gas directed into the fuel delivery line from the gas-phase tank.

Additional high-pressure hydrogen may thus be generated by activating the heater and vaporize the liquid hydrogen. The liquid tank may be in fluid communication with the fuel delivery line and the gas-phase tank during operation of the internal combustion engine (ICE) so that additional hydrogen gas is directed to the fuel delivery line directly when the heater is activated. As described in more detail further below, a fuel supply system of the inventive type can typically involve using the liquid hydrogen as a complement to one or more main gas-phase tanks so as to maintain the hydrogen pressure in the fuel delivery line above a minimum level when the pressure in the gas-phase tank(s) has decreased and approaches the minimum level. This can be controlled by measuring the pressure in fuel delivery line and controlling the power of the heater in response to the measured pressure. Gaseous hydrogen generated by vaporizing liquid hydrogen may also be used as an alternative to gas-phase hydrogen in a situation where the gas-phase tank(s) are empty or hydrogen cannot be fed from the gas-phase tank(s) to the fuel deliver line for some reason. Even if the hydrogen pressure that can be obtained from the liquid tank alone may not be sufficient for optimal operation of the ICE, it may be sufficient for operating the ICE in a low-power mode suitable for running a vehicle in a "limp mode" to a workshop or the like.

Unlike existing solutions that rely on hydraulic pumps and hydrogen compressors to artificially increase or maintain hydrogen fuel pressure in the buffer tank, the technology of the present disclosure provides an alternative by leveraging phase transition (liquid to gas) to achieve the desired pressure. This eliminates the need for traditional mechanical compression devices, leading to a more economical, lightweight, and reliable solution for sustaining hydrogen tank pressure.

By utilizing the liquid-to-gas phase transition process, it allows for the maintenance of hydrogen tank pressure at or above the injection pressure needed for internal engine combustion. This targeted pressure optimization ensures that the engine operates efficiently without unnecessary excess pressure, maximizing fuel utilization and extending the vehicle's range.

The integration of liquid hydrogen tanks as supplemental storage, coupled with the elimination of mechanical compression devices, presents a sustainable solution. This approach contributes to reducing the weight of the vehicle by minimizing the need for additional heavy equipment, promoting more efficient use of materials, and aligning with sustainability goals in vehicle design and operation.

Further, a fuel supply system of the above type potentially offers a quieter operation due to the absence of traditional mechanical compression devices. This could contribute to compliance with NVH (Noise, Vibration, Harshness) regulations, improving overall vehicle comfort.

Optionally in some examples, including in at least one preferred example, the fuel supply system is configured to generate and direct heated and vaporized hydrogen into the fuel delivery line in response to a decreasing hydrogen pressure in the gas-phase tank so as to maintain a hydrogen pressure in the fuel delivery line at or above a set pressure level.

Optionally in some examples, including in at least one preferred example, the fuel supply system is configured to initiate heating of liquid hydrogen when the pressure in the gas-phase tank or the fuel delivery line drops below a pressure threshold level.

Optionally in some examples, including in at least one preferred example, the fuel supply system comprises a control circuitry configured to control operation of the heater in dependence of a hydrogen pressure in the fuel delivery line or in the gas-phase tank. The control circuitry may be connected to or form part of an ICE system control circuitry and/or a vehicle control circuitry.

Optionally in some examples, including in at least one preferred example, the fuel supply system comprises a pressure sensor arranged to sense the hydrogen pressure in the fuel delivery line. The fuel supply system may include several pressure sensors located at different places. When the liquid tank is fluidly connected to the fuel delivery line the pressure sensor may be arranged in association with the liquid tank since the pressure will be the same. A signal from the pressure sensor is sent to the control circuitry that may activate the heater, or change the power of the heater, depending on the measured pressure and the settings of the control circuitry.

Optionally in some examples, including in at least one preferred example, the liquid tank is fluidly connected to the fuel delivery line via a first controllable valve configured to be set in an open or a closed position. The first controllable valve may be kept open during operation of the ICE when the heater is not activated and all hydrogen is delivered from the gas-phase tank(s). Alternatively, it may be opened when supplemental hydrogen is needed from the liquid tank. The first controllable valve is typically kept closed when the ICE is not in operation.

Optionally in some examples, including in at least one preferred example, the gas-phase tank is fluidly connected to the fuel delivery line via a second controllable valve configured to be set in an open or a closed position. The second controllable valve should be closed when the fuel delivery line is vented and depressurized to avoid that air (oxygen) enters the gas-phase tank. A venting valve for manual operation may be arranged for venting and depressurization of the fuel delivery line.

Optionally in some examples, including in at least one preferred example, a pressure relief safety valve is arranged in fluid communication with the liquid tank. The pressure relief valve has a safety function and is set to open at a maximum allowable pressure. The pressure relief safety valve may be arranged in fluid communication also with the fuel delivery line. The pressure in the liquid tank might exceed the designated pressure due to malfunction of the heater or the control circuitry.

Optionally in some examples, including in at least one preferred example, the controllable heater comprises a heating element arranged inside the liquid tank so as to be immersed in liquid hydrogen when a surface of liquid hydrogen contained in the liquid tank is located at or above a minimum threshold liquid level. The heating element might be overheated or in other ways be affected if not being in direct contact with the liquid fuel. The heating element is suitably arranged in the bottom of the liquid tank and the threshold liquid level is preferably set so that the heating element is fully immersed in liquid when its surface has dropped to the threshold liquid level even if the liquid tank is inclined (within reasonable limits), which may occur if the vehicle onto which the ICE and the fuel supply system are arranged is inclined.

Optionally in some examples, including in at least one preferred example, the controllable heater comprises an electric heating element and an actuator, wherein the actuator comprises a non-sparking current-controlling device, such as a silicon controlled rectifier (SCR). Any sparks should be avoided since hydrogen may mix with air (oxygen) and form an explosive mixture. Besides being non-sparking, an SCR is relatively easy to control, which simplifies control of the electric heating element.

Optionally in some examples, including in at least one preferred example, the liquid tank is provided with a level sensor arranged to detect whether a surface of the liquid hydrogen is located below a threshold liquid level. As noted above, to detect a minimum threshold liquid level is useful for ensuring that the heating element is kept immersed. A signal from the level sensor may be sent to the control circuitry if the surface of the liquid hydrogen is located at or below the minimum threshold liquid level. In response, the control circuitry may turn off the heater and/or generate an alarm signal or do something else depending on the settings of the control circuitry. The level sensor, or other level sensors, may be arranged to sense other (higher) liquid levels than the minimum threshold liquid level.

Optionally in some examples, including in at least one preferred example, the gas-phase tank is configured to contain gas-phase hydrogen at a pressure of at least 300 bar, or at least 500 bar, or at least 700 bar. In an example, the gas-phase tank(s) are filled at 700 bar and the fuel supply system is configured to keep the hydrogen pressure at or above 310 bar in the fuel delivery line. The pressure in the gas-phase tank and the fuel delivery line may then be allowed to drop to 310 bar until the heater is activated to maintain the pressure. In other examples, the operating pressure may be lower or higher than 310 bar.

According to a second aspect of the disclosure it concerns an internal combustion engine system comprising: i) an internal combustion engine configured to run on high-pressure gaseous hydrogen fuel; and ii) a fuel supply system configured to supply high-pressure gaseous hydrogen fuel to the internal combustion engine, wherein the fuel supply system is arranged according to above.

According to a third aspect of the disclosure it concerns a vehicle comprising an internal combustion engine system according to above. The internal combustion engine system may be arranged for propulsion of the vehicle.

According to a fourth aspect of the disclosure it concerns a method for supplying high-pressure gaseous hydrogen fuel to an internal combustion engine using a fuel supply system according to above, the method comprising: activating the heater so as to heat and vaporize liquid hydrogen in the liquid tank, and directing the heated and vaporized hydrogen into the fuel delivery line as a complement or alternative to hydrogen gas directed into the fuel delivery line from the gas-phase tank.

Optionally in some examples, including in at least one preferred example, the method further comprises: generating and directing heated and vaporized hydrogen into the fuel delivery line in response to a decreasing hydrogen pressure in the gas-phase tank so as to maintain a hydrogen pressure in the fuel delivery line at or above a set pressure level.

Optionally in some examples, including in at least one preferred example, the method further comprises: determining a pressure in the gas-phase tank or the fuel delivery line, and initiating heating of liquid hydrogen when the pressure in the gas-phase tank or the fuel delivery line drops below a pressure threshold level.

Optionally in some examples, including in at least one preferred example, wherein the fuel supply system comprises the first controllable valve as noted above, the method further comprises: opening the first controllable valve.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary and schematic view of a vehicle provided with an internal combustion engine system comprising an internal combustion engine configured to run on high-pressure gaseous hydrogen fuel and a fuel supply system configured to supply high-pressure gaseous hydrogen fuel to the internal combustion engine.
**FIG. 2** is an exemplary and schematic view of a fuel supply system for supplying high-pressure gaseous hydrogen fuel to an internal combustion engine.

### DETAILED DESCRIPTION

The detailed description set forth below provides information and examples of the disclosed technology with sufficient detail to enable those skilled in the art to practice the disclosure.

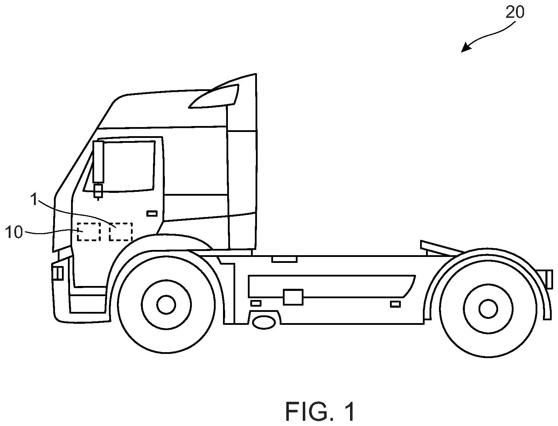

Figure 1 shows in a schematic view a vehicle 20 provided with an internal combustion engine system comprising an internal combustion engine 10 configured to run on high-pressure gaseous hydrogen fuel and a fuel supply system 1 configured to supply high-pressure gaseous hydrogen fuel to the internal combustion engine 10.

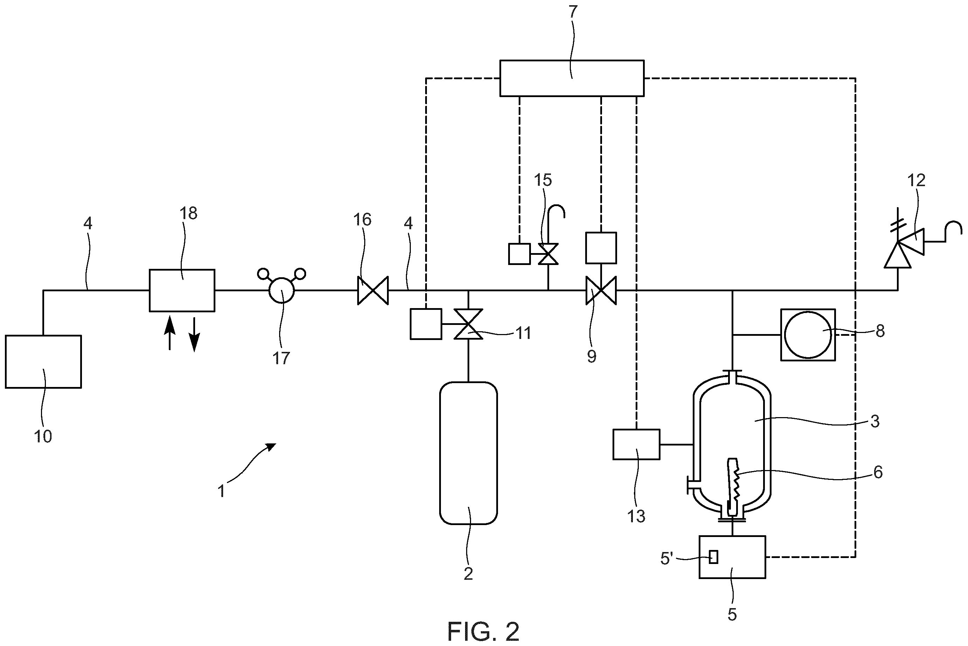

Figure 2 shows an example of a fuel supply system 1 according to this disclosure, the system 1 being arranged for supplying high-pressure gaseous hydrogen fuel to an internal combustion engine 10. The fuel supply system 1 comprises a hydrogen fuel tank arrangement 2, 3 and a fuel delivery line 4 arranged to deliver gaseous hydrogen from the hydrogen fuel tank arrangement 2, 3 to the internal combustion engine 10. The hydrogen fuel tank arrangement comprises in this case one gas-phase tank 2 configured to contain high-pressure gas-phase hydrogen and one liquid tank 3 configured to contain liquid hydrogen. The gas-phase tank 2 may be configured to contain gas-phase hydrogen at a pressure of 700 bar, and the system 1 is in this example configured deliver gaseous hydrogen fuel at a pressure of at least 310 bar to the engine 10.

A controllable heater, in this example comprising an electric heating element 6 and an actuator 5, is arranged in association with the liquid tank 3 so as to heat and vaporize the liquid hydrogen when activating the heater. The actuator 5 comprises a non-sparking current-controlling device 5' in the form of a silicon controlled rectifier SCR.

The electric heating element 6 is arranged inside the liquid tank 3 at the bottom thereof so as to be immersed in liquid hydrogen when a surface of liquid hydrogen contained in the liquid tank 3 is located at or above a minimum threshold liquid level. A level sensor 13 is arranged at the liquid tank 3 to detect whether the surface of the liquid hydrogen is located below the threshold liquid level. The system may be configured so that the heater is immediately turned off, or set in a non-operation mode if not turned on, when it is detected that the surface of liquid hydrogen is below the threshold liquid level. This way overheating or other issues related to the heating element 6 may be prevented.

The liquid tank 3 is fluidly connected to the fuel delivery line 4 via a first controllable valve 9 configured to be set in an open or a closed position.

A pressure sensor 8 is arranged to sense the hydrogen pressure in the fuel delivery line 4. In this case the pressure sensor 8 is arranged in association with the liquid tank 3 and can sense the pressure in the fuel delivery line when the first controllable valve 9 is open. In the exemplified fuel supply system 1 shown here, the first controllable valve 9 is kept open during operation of the engine system. As an alternative or complement, one or more pressure sensors may be arranged to sense the pressure in the fuel delivery line 4 in other positions than exemplified in figure 2.

The gas-phase tank 2 is fluidly connected to the fuel delivery line 4 via a second controllable valve 11 configured to be set in an open or a closed position.

A pressure relief safety valve 12 is arranged in fluid communication with the liquid tank 3. The pressure relief safety valve 12 is configured to be forced open if the pressure exceeds a preset maximum limit. When the first controllable valve 9 is open, the pressure relief safety valve 12 is in fluid communication with the fuel delivery line 4.

The fuel supply system 1 further comprises a controllable vent valve 15, a manually operable fuel delivery line valve 16, a heat exchanger 18 for cooling (or heating) hydrogen flowing through the fuel delivery line 4, and a pressure controller 17 that keeps the pressure of the hydrogen that reaches the engine 10 at a given pressure, such as at least 310 bar. The fuel delivery line valve 16 may generally be kept open but closed for e.g. engine maintenance.

The fuel supply system 1 further comprises a control circuitry 7 configured to control operation of the heating element 6 via the actuator 5 and valves 9, 11 and 15 via corresponding valve actuators. The control circuitry 7 is further configured to receive and handle sensor signals from the pressure sensor 8 and the level sensor 13.

In general it can be said that the fuel supply system 1 is configured to direct the heated and vaporized hydrogen into the fuel delivery line 4 as a complement or alternative to hydrogen gas directed into the fuel delivery line 4 from the gas-phase tank 2. The fuel supply system 1 may further configured to generate and direct heated and vaporized hydrogen into the fuel delivery line 4 in response to a decreasing hydrogen pressure in the gas-phase tank 2 so as to maintain a hydrogen pressure in the fuel delivery line 4 at or above a set pressure level, such as 310 bar. The fuel supply system 1 may further be configured to initiate heating of liquid hydrogen when the pressure in the gas-phase tank 2 or the fuel delivery line 4 drops below a pressure threshold level, which may be the same as the set pressure level. The control circuitry 7 may be set to control operation of the heater 5, 6 in dependence of a hydrogen pressure in the fuel delivery line 4 or in the gas-phase tank 2.

When the internal combustion engine 10 is turned off, the controllable valves 9, 11 , 15 are typically closed. When the engine 10 is to be started and the gas tank 2 is full (or at least has a pressure above the set pressure level), the control unit 7 opens the second controllable valve 11 (the gas tank valve) so that the fuel delivery line becomes pressurized. The first controllable valve 9 (the liquid tank valve) may or may not be opened. If the pressure from the gas-phase tank 2 remains sufficient during engine operation there is no need to generate additional hydrogen pressure from the liquid tank 3. Valve 11 (and valve 9 if open) is closed when the engine 10 is turned off, and the controllable vent valve 15 may then be opened to depressurize the fuel delivery line 4.

If, on the other hand, the pressure in the fuel delivery line 4 falls below the pressure threshold level during operation of the engine 10, as indicated by pressure sensor 8, the control circuitry 7 opens the first controllable valve 9 (if not already open) and activates the heating element 6 by activating the actuator 5 so as to heat and vaporize liquid hydrogen and thus generate more gaseous hydrogen and thereby maintain the pressure in the fuel delivery line 4 (or, in principle, increase the pressure or slowing down the decrease of pressure depending on selected heater power and hydrogen consumption).

If the level sensor 13 indicates that the surface of the liquid hydrogen is located below the threshold liquid level, the control unit 7 interrupts heating of the heating element 6, or at least reduces the heating power to a minimum level. A warning signal and/or message may also be generated.

The fuel supply system 1 may include more than one liquid tank similar to the one shown in figure 2, which means that a second liquid tank can be used for producing additional gaseous hydrogen when the first liquid tank is empty (or rather when the surface level has reached the threshold liquid level in the first liquid tank).

A method for supplying high-pressure gaseous hydrogen fuel to the internal combustion engine 10 using the fuel supply system 1 may comprise:
- activating the heater 5, 6 so as to heat and vaporize liquid hydrogen in the liquid tank 3, and
- directing the heated and vaporized hydrogen into the fuel delivery line 4 as a complement or alternative to hydrogen gas directed into the fuel delivery line 4 from the gas-phase tank 2.

The method may further comprise:
- generating and directing heated and vaporized hydrogen into the fuel delivery line 4 in response to a decreasing hydrogen pressure in the gas-phase tank 2 so as to maintain a hydrogen pressure in the fuel delivery line 4 at or above a set pressure level.

The method may further comprise:
- determining a pressure in the gas-phase tank 2 or the fuel delivery line 4 using the pressure sensor 8, and
- initiating heating of liquid hydrogen when the pressure in the gas-phase tank 2 or the fuel delivery line 4 drops below a pressure threshold level.

If the first controllable valve 9 is closed, the method may further comprise:
- opening the first controllable valve (9).

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A fuel supply system (1) for supplying high-pressure gaseous hydrogen fuel to an internal combustion engine (10), the system (1) comprising:
- a hydrogen fuel tank arrangement (2, 3) and
- a fuel delivery line (4) arranged to deliver gaseous hydrogen from the hydrogen fuel tank arrangement (2, 3) to the internal combustion engine (10),
wherein the hydrogen fuel tank arrangement comprises at least one gas-phase tank (2) configured to contain high-pressure gas-phase hydrogen and at least one liquid tank (3) configured to contain liquid hydrogen,
wherein a controllable heater (5, 6) is arranged in association with the at least one liquid tank (3) so as to heat and vaporize the liquid hydrogen when activating the heater (5, 6),
wherein the system (1) is configured to direct the heated and vaporized hydrogen into the fuel delivery line (4) as a complement or alternative to hydrogen gas directed into the fuel delivery line (4) from the gas-phase tank (2).

2. The fuel supply system (1) of claim 1, wherein the fuel supply system (1) is configured to generate and direct heated and vaporized hydrogen into the fuel delivery line (4) in response to a decreasing hydrogen pressure in the gas-phase tank (2) so as to maintain a hydrogen pressure in the fuel delivery line (4) at or above a set pressure level.

3. The fuel supply system (1) of claim 1 or 2, wherein the fuel supply system (1) is configured to initiate heating of liquid hydrogen when the pressure in the gas-phase tank (2) or the fuel delivery line (4) drops below a pressure threshold level.

4. The fuel supply system (1) of any of the above claims, wherein the fuel supply system (1) comprises a control circuitry (7) configured to control operation of the heater (5, 6) in dependence of a hydrogen pressure in the fuel delivery line (4) or in the gas-phase tank (2).

5. The fuel supply system (1) of any of the above claims, wherein the fuel supply system (1) comprises a pressure sensor (8) arranged to sense the hydrogen pressure in the fuel delivery line (4).

6. The fuel supply system (1) of any of the above claims, wherein the liquid tank (3) is fluidly connected to the fuel delivery line (4) via a first controllable valve (9) configured to be set in an open or a closed position.

7. The fuel supply system (1) of any of the above claims, wherein the gas-phase tank (2) is fluidly connected to the fuel delivery line (4) via a second controllable valve (11) configured to be set in an open or a closed position.

8. The fuel supply system (1) of any of the above claims, wherein a pressure relief safety valve (12) is arranged in fluid communication with the liquid tank (3).

9. The fuel supply system (1) of any of the above claims, wherein the controllable heater (5, 6) comprises a heating element (6) arranged inside the liquid tank (3) so as to be immersed in liquid hydrogen when a surface of liquid hydrogen contained in the liquid tank (3) is located at or above a minimum threshold liquid level.

10. The fuel supply system (1) of any of the above claims, wherein the controllable heater comprises an electric heating element (6) and an actuator (5), wherein the actuator (5) comprises a non-sparking current-controlling device (5'), such as a silicon controlled rectifier (SCR).

11. The fuel supply system (1) of any of the above claims, wherein the liquid tank (3) is provided with a level sensor (13) arranged to detect whether a surface of the liquid hydrogen is located below a threshold liquid level.

12. The fuel supply system (1) of any of the above claims, wherein the gas-phase tank (2) is configured to contain gas-phase hydrogen at a pressure of at least 300 bar, or at least 500 bar, or at least 700 bar.

13. An internal combustion engine system comprising: i) an internal combustion engine (10) configured to run on high-pressure gaseous hydrogen fuel; and ii) a fuel supply system (1) configured to supply high-pressure gaseous hydrogen fuel to the internal combustion engine (10), wherein the fuel supply system (1) is arranged according to any of the above claims.

14. A vehicle (20) comprising an internal combustion engine system (10, 1) according to claim 13.

15. A method for supplying high-pressure gaseous hydrogen fuel to an internal combustion engine (10) using a fuel supply system (1) according to any of claims 1-12, the method comprising:
- activating the heater (5, 6) so as to heat and vaporize liquid hydrogen in the liquid tank (3), and
- directing the heated and vaporized hydrogen into the fuel delivery line (4) as a complement or alternative to hydrogen gas directed into the fuel delivery line (4) from the gas-phase tank (2).

16. The method of claim 15 further comprising:
- generating and directing heated and vaporized hydrogen into the fuel delivery line (4) in response to a decreasing hydrogen pressure in the gas-phase tank (2) so as to maintain a hydrogen pressure in the fuel delivery line (4) at or above a set pressure level.

17. The method of claim 15 or 16 further comprising:
- determining a pressure in the gas-phase tank (2) or the fuel delivery line (4), and
- initiating heating of liquid hydrogen when the pressure in the gas-phase tank (2) or the fuel delivery line (4) drops below a pressure threshold level.

18. The method of any of claims 15-17, wherein the fuel supply system (1) is arranged according to claim 6, the method comprising:
- opening the first controllable valve (9).
